# FASCICULE DE BREVET EUROPEEN

(11) **EP 4 173 327 B1**
(45) Date de publication et mention de la délivrance du brevet: **21.01.2026**
(21) Numéro de dépôt: 21740120.7
(22) Date de dépôt: 16.06.2021
(51) Int. Cl.: H04W 8/20, H04W 12/30, H04L 9/40

(54) **PROCÉDÉ DE PROTECTION D'UN PROFIL D'ACCÈS À UN RÉSEAU CONTRE LE CLONAGE**
VERFAHREN ZUM SCHUTZ EINES NETZWERKZUGANGSPROFILS GEGEN KLONEN
METHOD FOR PROTECTING A NETWORK ACCESS PROFILE AGAINST CLONING

(30) Priorité: 29.06.2020 FR 2006832
(43) Date de publication de la demande: 03.05.2023
(73) Titulaire: Orange, 92130 Issy-les-Moulineaux (FR)
(72) Inventeur: GAMISHEV, Todor, 92326 Châtillon Cedex (FR); COUREAU, Laurent, 92326 Châtillon Cedex (FR)
(86) Numéro de dépôt international: PCT/FR2021/051084
(87) Numéro de publication internationale: WO 2022/003266

(56) Documents cités:
- US-A1- 2016 099 923
- US-A1- 2016 241 537
- US-A1- 2017 142 121

## Description

La présente invention se rapporte au domaine général des télécommunications. Elle concerne plus précisément un procédé de protection d'un profil d'accès à un réseau contre le clonage.

Elle trouve une application particulièrement intéressante dans le cadre de l'utilisation de plus en plus répandue de modules de sécurité embarqués, donc inamovibles, dans des équipements mobiles grand public, tels qu'un terminal mobile ou une tablette. Par exemple lors de l'achat d'un nouvel équipement mobile, l'invention permet à un utilisateur de transférer son profil d'accès sur ce nouvel équipement de manière conviviale, tout en offrant à l'opérateur toutes les garanties de sécurité pour son réseau, notamment celle de ne jamais avoir dans son réseau deux profils d'accès identiques actifs simultanément. « Actifs » signifie adaptés pour accéder au réseau de l'opérateur.

Les standards de carte SIM embarquée développés pour la GSMA, ou « eSIM » de type eUICC » (de l'anglais « embedded Universal Integrated Circuit Card), et SSP (pour « Smart Secure Platform ») développé par l'ETSI ne permettent pas de transférer un profil d'accès à un réseau d'un opérateur directement d'un premier équipement mobile à un deuxième équipement mobile de manière sécurisée. La prévention contre le clonage de profils est un obstacle majeur à la mise à disposition d'un tel mécanisme. En effet, la protection contre le clonage de profils est un enjeu sécuritaire primordial pour les opérateurs de réseau.

Un tel mécanisme de transfert de profil peut cependant s'avérer utile. En effet, il est habituel que des abonnés acquièrent de nouveaux équipements mobiles. Il est donc naturel d'envisager de leur proposer une manière simple et conviviale de transférer leur profil d'accès au réseau actif d'un équipement à un autre, sans interaction directe avec l'opérateur, que ce soit de terminal à terminal, par un passage en agence, ou à distance via Internet ou par téléphone, tout en garantissant à l'opérateur une protection contre le clonage de profil et ainsi la sécurité de son réseau.

Un des buts de l'invention est de remédier à des insuffisances/inconvénients de l'état de la technique, et/ou d'y apporter des améliorations.

A cette fin, l'invention propose un procédé de protection d'un profil d'accès à un réseau contre le clonage, un premier équipement mobile comprenant un module de sécurité, dit « premier module de sécurité », ledit premier module de sécurité comprenant ledit profil d'accès au réseau, un deuxième équipement mobile étant agencé pour recevoir ledit profil d'accès au réseau, ledit deuxième équipement mobile comprenant un module de sécurité, dit « deuxième module de sécurité », ledit premier module de sécurité, respectivement ledit deuxième module de sécurité, étant agencé pour établir un canal logique de communication avec le deuxième module de sécurité, respectivement le premier module de sécurité, ledit procédé comprenant les étapes suivantes, mises en œuvre par le premier module de sécurité :
- génération d'une clé secrète,
- chiffrement, au moyen de ladite clé secrète, d'un paquet de données associé au profil d'accès au réseau, et envoi au deuxième module de sécurité dudit paquet chiffré à travers le canal logique de communication,
- réception en provenance du deuxième module de sécurité d'un accusé de réception, représentatif de la bonne réception dudit paquet de données chiffré,
- suppression du paquet de données associé au profil d'accès au réseau, puis envoi de la clé secrète au deuxième module de sécurité à travers le canal logique de communication.

Le procédé décrit garantit à un opérateur de réseau qu'il n'existe pas dans son réseau deux profils d'accès identiques et actifs, c'est-à-dire adaptés pour accéder au réseau. En effet, le procédé garantit que, lors du transfert d'un profil d'accès au réseau d'un premier équipement mobile à un deuxième équipement mobile, le profil d'accès au réseau transféré au deuxième équipement mobile ne peut devenir actif qu'à partir du moment où le profil d'accès est supprimé du premier équipement mobile. Le procédé offre une solution contre le clonage de profils d'accès au réseau à l'opérateur. En effet, le couple profil d'accès au réseau et clé secrète qui permet de le chiffrer et/ou le déchiffrer est à tout instant présent tout au plus dans un seul module de sécurité. Ainsi, à aucun moment un clone du profil d'accès déchiffré dans un module de sécurité ne coexiste avec le profil déchiffré lui-même dans un autre module de sécurité. Par ailleurs, il n'est pas possible de mener à bien une attaque contre les deux équipements mobiles et les deux modules de sécurité pour tenter de cloner le profil d'accès au réseau, en provoquant par exemple une faute tel une réinitialisation, ou reset, de l'un ou l'autre des terminaux et de leur élément de sécurité respectif.

La sécurité de ce procédé, qui implique des échanges de module de sécurité à module de sécurité, repose sur la sécurité du module de sécurité et pas sur la sécurité de l'équipement mobile. Les risques d'attaque lors de la mise en œuvre du procédé de transfert sont ainsi limités, les modules de sécurité offrant, par construction un niveau de sécurité élevé.

De façon avantageuse, le procédé comprend les étapes suivantes, mises en œuvre par le deuxième module de sécurité :
- réception d'un paquet chiffré des données associées au profil d'accès au réseau,
- envoi d'un accusé de réception attestant de la bonne réception du paquet chiffré,
- réception de la clé secrète,
- déchiffrement du paquet de données chiffré au moyen de la clé secrète reçue.

Les étapes décrites ici correspondent aux étapes mises en œuvre par le deuxième équipement mobile et son module de sécurité associé.

Dans un exemple de réalisation, le canal logique de communication logique est un canal sécurisé.

Dans cet exemple de réalisation, le canal logique de communication établi entre le module de sécurité du premier équipement mobile et le module de sécurité du deuxième équipement mobile est un canal sécurisé, c'est-à-dire qu'il offre un ensemble de procédures de sécurité basées sur des algorithmes cryptographiques éprouvés. Il y a authentification mutuelle entre les deux modules de sécurité lors de l'établissement du canal logique de communication sécurisé. Cette authentification mutuelle, qui repose sur les certificats de clé publique mémorisés respectivement dans chacun des modules de sécurité garantit à chacun des modules de sécurité qu'il discute avec un module authentique. Par ailleurs le canal établi entre les deux modules de sécurité est chiffré. Ainsi, un pirate qui aurait par exemple pris le contrôle d'un des équipements mobiles et qui verrait les données circuler sur le canal serait incapable d'interpréter ces données. Il ne pourrait par exemple pas accéder à la clé de chiffrement transmise et qui est nécessaire pour déchiffrer le profil d'accès transféré chiffré. Cette sécurité offre à l'opérateur une garantie supplémentaire : un attaquant ne peut obtenir le profil d'accès au réseau et disposer ainsi d'un clone du profil.

Enfin, la sécurisation du canal offre une protection contre des attaques du milieu (ou attaques « Man In The Middle » en anglais) au cours desquelles un attaquant, positionné entre deux équipements, par exemple ici les deux modules de sécurité écoute le canal de communication et récupère des informations sensibles.

Dans un exemple de réalisation, la clé secrète est générée conformément à une méthode de génération de clés dans un module de sécurité (« On Board Key Generation » en anglais) intégrée dans le premier module de sécurité.

Dans cet exemple de réalisation, la clé de chiffrement est une clé aléatoire générée au moyen d'une méthode intégrée au module de sécurité. Cette méthode de génération de clés est privilégiée par l'opérateur car elle offre comme gage supplémentaire de sécurité d'être intégrée au module de sécurité.

Dans un autre exemple de réalisation, la clé secrète est générée en appliquant un algorithme de diversification de clés, stocké dans le premier module de sécurité, à une clé de diversification mémorisée dans le profil d'accès au réseau.

Dans cet exemple de réalisation alternatif, la clé de diversification est comprise dans le profil d'accès au réseau et est utilisée au sein du module de sécurité pour générer la clé de chiffrement.

Dans un exemple de réalisation, où le canal logique de communication est sécurisé, le procédé comprend en outre les étapes suivantes, mises en œuvre par le deuxième module de sécurité :
- contrôle de l'intégrité du paquet de données d'accès au réseau reçu chiffré du premier module de sécurité, et
- contrôle de l'intégrité de la clé de chiffrement reçue chiffrée du premier module de sécurité.

L'invention concerne également un module de sécurité, dit premier module de sécurité, compris dans un premier équipement mobile, ledit premier module de sécurité comprenant un profil d'accès au réseau, un deuxième équipement comprenant un module de sécurité, dit deuxième module de sécurité, ledit premier et ledit deuxième module de sécurité étant adaptés pour établir un canal logique de communication, ledit module de sécurité comprenant :
- des moyens de génération d'une clé secrète, agencés pour générer une clé secrète,
- des moyens de chiffrement et d'envoi, agencés pour chiffrer un paquet de données associé au profil d'accès au réseau au moyen de ladite clé secrète, et pour envoyer au deuxième module de sécurité ledit paquet chiffré à travers le canal logique de communication,
- des moyens de réception, agencés pour recevoir en provenance du deuxième module de sécurité un accusé de réception, représentatif de la bonne réception dudit paquet de données chiffré,
- des moyens de suppression, agencés pour supprimer le paquet de données associé au profil d'accès au réseau, et
- des moyens d'envoi agencés pour envoyer ladite clé secrète au deuxième module de sécurité à travers le canal logique de communication.

Dans un exemple de réalisation, le module de sécurité comprend en outre :
- des deuxième moyens de réception, agencés pour recevoir le paquet chiffré des données associées au profil d'accès au réseau,
- des moyens d'envoi, agencés pour envoyer l'accusé de réception représentatif de la bonne réception dudit paquet de données chiffré,
- des troisième moyens de réception, agencés pour recevoir la clé secrète,
- des moyens de déchiffrement, agencés pour déchiffrer, au moyen de la clé secrète reçue, le paquet de données chiffré.

Dans cet exemple de réalisation, l'équipement mobile, associé à un module de sécurité, est agencé d'une part pour initier un transfert de profil d'accès au réseau vers un module de sécurité associé à un autre équipement mobile et d'autre part pour recevoir un profil d'accès d'un autre équipement mobile associé à un module de sécurité.

L'invention concerne aussi un programme pour un module de sécurité associé à équipement mobile, comprenant des instructions de code de programme destinées à commander l'exécution des étapes du procédé de protection d'un profil d'accès à un réseau contre le clonage tel que décrit précédemment, lorsque le programme est exécuté sur ledit équipement associé audit module.

L'invention porte également sur un support de données dans lequel est enregistré le programme précédent.

L'invention concerne aussi un équipement mobile comprenant un module de sécurité tel que décrit ci-dessus.

D'autres caractéristiques et avantages de la présente invention seront mieux compris de la description détaillée et des figures annexées parmi lesquels :
- la figure 1 présente les étapes d'un procédé de protection d'un profil d'accès à un réseau contre le clonage, selon un exemple de réalisation ;
- la figure 2 est une représentation schématique d'un module de sécurité associé à un équipement mobile, apte à mettre en œuvre les étapes du procédé de protection d'un profil d'accès à un réseau contre le clonage, selon un exemple de réalisation.

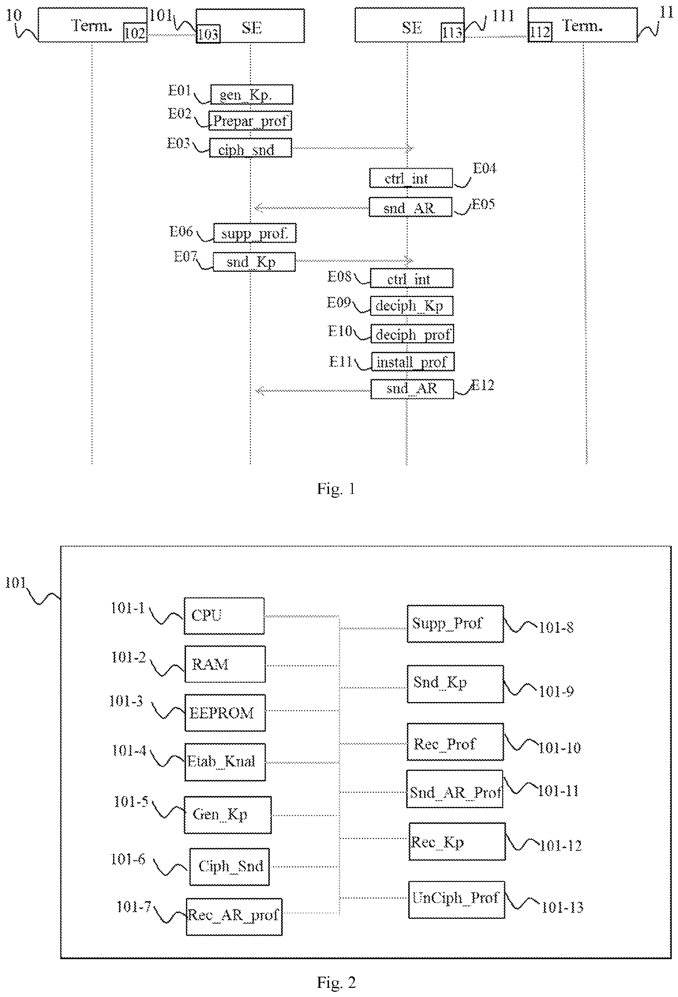

Les étapes d'un procédé de protection d'un profil d'accès à un réseau contre le clonage, selon un premier exemple de réalisation, vont maintenant être décrites en relation avec la figure 1.

Un premier équipement mobile 10 d'utilisateur (l'utilisateur n'est pas représenté sur la figure 1), par exemple un terminal mobile ou une tablette, est équipé d'un module de sécurité 101, par exemple un module embarqué et donc potentiellement inamovible, tel qu'un module « eSIM » (« embedded Subscriber Identity Module »), de type eUICC (de l'anglais « embedded Universal Integrated Circuit Card). Le module de sécurité 101 comprend un certificat de clé publique qui lui est propre, la clé publique étant associée par calcul à une clé privée mémorisée sur le module de sécurité 101. Le certificat est par exemple conforme à la norme X.509 v3 ; il a été délivré par une Autorité de Confiance et a par exemple été installé sur le module de sécurité 101, ainsi que la clé privée associée, en usine. Le certificat de clé publique peut être spécifique au procédé de protection contre le clonage. Dans un autre exemple de réalisation, il est prévu également pour la mise en œuvre d'autres opérations de confiance dans le réseau, non décrites ici. Le module de sécurité 101 du premier équipement mobile comprend également un profil d'accès au réseau associé à une offre de service souscrite par l'utilisateur auprès d'un opérateur (non représenté sur la figure 1). On suppose que l'utilisateur a activé son profil d'accès au réseau, c'est-à-dire que le profil est adapté pour accéder au réseau.

Un deuxième équipement mobile 11 comprend un module de sécurité embarqué 111. A l'instar du module de sécurité 101, le module de sécurité 111 comprend également un certificat de clé publique qui lui est propre, la clé publique étant associée par calcul à une clé privée stockée sur le module de sécurité 111.

Afin d'alléger l'écriture, le module de sécurité 101 du premier terminal mobile 10 peut être également appelé « premier module de sécurité 101 ». De la même manière, le module de sécurité 111 du deuxième équipement mobile 11 peut également être appelé « deuxième module de sécurité 111 ».

Le premier et le deuxième équipement mobile 10, 11 comprennent chacun une application logicielle 102, 112, fournissant à l'équipement mobile une fonctionnalité de gestion de profils. Cette application logicielle comprend des instructions de code agencées pour mettre en œuvre les étapes du procédé décrit ici et qui sont mises en œuvre par les équipements mobiles 10, 11. Dans un exemple de réalisation, cette application est intégrée à un programme de type « LPA » (pour « Local Profile Assistant »), ou gestionnaire local de profil, habituellement agencé pour demander et récupérer un profil d'accès au réseau auprès d'un serveur de données d'un opérateur via une connexion Internet sécurisée, et pour commander son installation et son activation sur le module de sécurité.

Le premier et le deuxième module de sécurité 101, 111 comprennent chacun une application logicielle 103, 113, interfacée avec l'application 102, 112 de l'équipement mobile 10, 11 associé. Cette application comprend des instructions de code agencée pour mettre en œuvre les étapes du procédé de protection d'un profil d'accès au réseau contre le clonage qui sont mises en œuvre par les modules de sécurité 101, 111.

Le procédé de protection d'un profil d'accès au réseau contre le clonage est illustré ici dans le cadre du transfert d'un profil d'accès au réseau du module de sécurité 101 du premier équipement mobile 10 vers le module de sécurité 111 du deuxième équipement mobile 11. Dans un autre exemple de réalisation, non décrit, il peut être mis en œuvre lors du transfert d'un profil de sécurité d'un premier module de sécurité vers un deuxième module de sécurité d'un même équipement mobile.

On suppose que préalablement aux étapes du procédé décrit ici, un canal de communication logique a été établi, selon une méthode connue, entre le module de sécurité 101 du premier équipement mobile 10 et le module de sécurité 111 du deuxième équipement mobile 11.

Dans l'exemple de réalisation décrit ici, le canal de communication logique est sécurisé. Il est ainsi authentifié, protégé en confidentialité et en intégrité. L'établissement d'un tel canal sécurisé est mis en œuvre selon une méthode connue, reposant par exemple sur le protocole TLS (de l'anglais « Transport Layer Security ») ou sur le protocole DTLS (pour « Datagram Transport Layer Security »).L'établissement du canal de communication logique sécurisé comprend une authentification mutuelle entre les deux modules de sécurité 101, 111. Dans cet exemple, l'établissement du canal logique de communication sécurisé utilise les certificats de clé publique compris dans les modules de sécurité 101, 111. A noter que le canal logique de communication sécurisé est établi entre les deux modules de sécurité 101, 111. Ainsi, la sécurité d'un transfert de données entre les deux modules de sécurité est garantie de bout en bout. Les deux modules de sécurité 101, 111 ont mis en œuvre une authentification mutuelle propre à TLS ou à DTLS sur la base d'échanges de messages conformes au protocole utilisé pour l'établissement du canal logique de communication sécurisé.

Dans un autre exemple de réalisation, non représenté sur la figure 1, le canal logique de communication établi entre les deux modules de sécurité n'est pas sécurisé. Cet exemple de réalisation peut par exemple être mis en œuvre dans un environnement contrôlé, c'est-à-dire sécurisé, par exemple dans un environnement offert et géré par l'opérateur de réseau.

Dans une étape initiale E01 de génération de clé, le premier module de sécurité 101 génère une clé secrète Kp destinée à être utilisée par un algorithme de chiffrement à clé secrète pour chiffrer des données. Dans le procédé de protection contre le clonage, la clé secrète Kp est destinée à chiffrer les données du profil à transférer extraites du module de sécurité 101. Elle est destinée également à être utilisée ultérieurement par le deuxième module de sécurité 111 pour déchiffrer les données du profil chiffrées.

Dans un premier exemple de réalisation, la génération de la clé secrète Kp est basée sur la méthode de génération de clés aléatoires intégrée aux modules de sécurité, appelée « OBKG » (de l'anglais « OnBoard Key Generation »). Cette méthode est appréciée d'un opérateur de réseau car la sécurité repose sur la sécurité du module de sécurité uniquement.

Dans un autre exemple de réalisation, une clé de diversification mémorisée dans le profil d'accès au réseau lors de l'installation de celui-ci sur le module de sécurité 101 est utilisée comme paramètre d'un algorithme de diversification de clés compris dans le module de sécurité 101 afin de générer la clé secrète Kp.

Dans une étape E02 suivante de préparation de données du profil, le premier module de sécurité 101 extrait les données correspondant au profil d'accès au réseau à transférer et génère un paquet, ou « package », de données à transférer correspondant au profil d'accès à transférer. La préparation des données du profil consiste à formater les données du profil de manière à obtenir un paquet de données adapté pour être interopérable avec d'autres modules de sécurité.

Dans une étape E03 suivante de chiffrement et d'envoi, le module de sécurité 101 du premier équipement mobile 10 chiffre le paquet de données à transférer en appliquant un algorithme de chiffrement paramétré par la clé secrète Kp générée lors de l'étape E01. Il envoie ensuite le paquet de données chiffré au module de sécurité 111 du deuxième équipement mobile 11. Le paquet de données chiffré du profil à transférer est reçu par le module de sécurité 111 du deuxième équipement mobile 11 en fin d'étape E03. A noter que le module de sécurité 111 du deuxième équipement mobile 11 n'est pas en mesure de déchiffrer le paquet de données reçu chiffré. Il ne dispose en effet pas de la clé secrète Kp. A ce stade, un seul profil d'accès au réseau existe et est susceptible d'être actif dans le réseau : celui qui est compris dans le module de sécurité 101 du premier équipement mobile 10.

Dans l'exemple de réalisation décrit ici où le canal de communication logique établi entre les deux modules de sécurité 101, 102, est sécurisé, les données du profil à transférer sont protégées d'une part par un chiffrement au moyen de la clé secrète Kp et d'autre part, par un chiffrement inhérent au canal de communication sécurisé. Par ailleurs le paquet de données du profil transféré bénéficie d'un contrôle d'intégrité inhérent au canal de communication sécurisé établi.

Dans une étape suivante E04 de contrôle d'intégrité, le module de sécurité 111 du deuxième équipement mobile 11 met en œuvre un contrôle d'intégrité du paquet de données chiffré. Ce contrôle d'intégrité est destiné à s'assurer que le paquet de données reçu chiffré est identique au paquet de données chiffré envoyé par le module de sécurité 101 du premier équipement mobile 10 au cours de l'étape E03 et qu'il n'a pas été altéré lors du transfert entre le premier module de sécurité 101 et le deuxième module de sécurité 111. Le contrôle d'intégrité est mis en œuvre selon une méthode connue de vérification d'un code d'authentification de type HMAC (Hash-based Message Authentication Code) propre au protocole de sécurité utilisé pour établir le canal de communication sécurisé.

A noter que l'étape E04 de contrôle d'intégrité n'est pas mise en œuvre lorsque le canal de communication logique n'est pas sécurisé.

Dans l'exemple de réalisation décrit ici où un contrôle d'intégrité est mis en œuvre au cours de l'étape E04 et où ce contrôle est négatif, indiquant que le paquet chiffré de données du profil reçu a été altéré, le procédé s'arrête. Dans ce cas, au cours d'une étape non représentée sur la figure 1, un message est affiché sur l'écran du premier équipement mobile 10 à l'attention de l'utilisateur l'informant de l'échec de la procédure en cours, par exemple du transfert du profil d'accès.

Dans une étape suivante E05 d'envoi d'un accusé de réception, le deuxième module de sécurité 111 envoie au premier module de sécurité 101 un accusé de réception du paquet de données chiffré, attestant de la bonne réception du paquet.

Dans l'exemple de réalisation décrit ici où le canal logique de communication est sécurisé, l'accusé de réception comprend un indicateur du résultat du contrôle d'intégrité des données mis en œuvre dans l'étape E04 de contrôle d'intégrité.

Dans une étape E06 de suppression du profil, mise en œuvre après la réception de l'accusé de réception, le premier module de sécurité 101 supprime le profil d'accès au réseau qu'il avait mémorisé.

On note qu'à ce stade une seule occurrence du paquet de données correspondant au profil d'accès au réseau existe, celle mémorisée dans le module de sécurité 111 du deuxième équipement mobile 11. Cependant le paquet de données est chiffré et le deuxième module de sécurité 111 ne possède pas la clé secrète Kp permettant de le déchiffrer. Ainsi, il n'est pas possible, à ce stade, d'accéder au réseau conformément à l'offre de service associée au profil d'accès qui est pour l'instant inutilisable.

Dans une étape suivante E07 d'envoi de la clé secrète, le premier module de sécurité 101 envoie la clé secrète Kp au deuxième module de sécurité 101 via le canal de communication logique établi préalablement. La clé secrète Kp est reçue par le deuxième module de sécurité 101 en fin d'étape E07.

Dans l'exemple de réalisation décrit ici où le canal de communication logique entre les deux modules de sécurité 101, 111 est sécurisé, la clé secrète Kp est transmise de façon sécurisée au moyen d'un chiffrement inhérent au canal logique sécurisé. Dans le cas où le canal de communication logique n'est pas sécurisé, la clé secrète Kp est transmise en clair au deuxième module de sécurité 111.

Dans une étape suivante E08 de contrôle d'intégrité de la clé secrète, il est procédé au contrôle d'intégrité de la clé secrète Kp reçue chiffrée. Le contrôle d'intégrité est mis en œuvre par le deuxième module de sécurité 111 par vérification d'un code d'authentification HMAC inhérent à la sécurisation du canal de communication. Dans le cas où le contrôle d'intégrité est négatif, indiquant que la clé secrète Kp transmise chiffrée a été altérée lors de sa transmission, le procédé s'arrête. Dans ce cas, au cours d'une étape non représentée sur la figure 1, un message est affiché sur l'écran du deuxième équipement mobile 11 à l'attention de l'utilisateur l'informant de l'échec de la procédure en cours, par exemple du transfert du profil d'accès.

A noter que cette étape n'est pas mise en œuvre lorsque le canal de communication logique n'est pas sécurisé.

Dans une étape E09 de déchiffrement de la clé secrète, il est procédé au déchiffrement de la clé secrète Kp. Le déchiffrement de la clé secrète Kp est mis en œuvre au moyen des données inhérentes au canal logique de communication sécurisé. En fin d'étape E09, le deuxième module de sécurité 111 dispose de la clé secrète Kp.

A noter que cette étape n'est pas mise en œuvre lorsque le canal de communication logique n'est pas sécurisé. Dans ce cas, la clé secrète Kp n'est en effet pas chiffrée.

Dans une étape E10 de déchiffrement du paquet de données chiffré, le deuxième module de sécurité 111 procède au déchiffrement du paquet chiffré de données du profil reçu au cours de l'étape E03. Il utilise à cette fin la clé secrète Kp comme paramètre de l'algorithme de chiffrement utilisé pour chiffrer les données du profil. En fin d'étape E10, le module de sécurité 111 du deuxième équipement mobile 11 dispose des données du profil d'accès au réseau extraites du module de sécurité 101 du premier équipement mobile 10 au cours de l'étape E02 de préparation des données du profil.

Ainsi, à la fin de l'étape E10 de déchiffrement, seul le module de sécurité 111 du deuxième équipement mobile 11 dispose du paquet de données correspondant au profil d'accès au réseau.

Dans une étape suivante E11 d'installation du profil, le deuxième module de sécurité 111 installe et active le profil d'accès au réseau. Par exemple, le gestionnaire de profil LPA, non représenté sur la figure 1, commande l'installation et l'activation du profil sur le deuxième module de sécurité 111.

Dans une étape E12 d'envoi d'un accusé de réception, optionnelle, le module de sécurité 111 du deuxième équipement mobile 11 envoie au module de sécurité 101 du premier équipement mobile 11 un message l'informant de la bonne installation et de la bonne activation du profil d'accès au réseau. Ce message est transmis au premier équipement mobile 10 et/ou au deuxième équipement mobile 11 afin d'informer l'utilisateur de la bonne exécution du transfert du profil d'accès au réseau dans le cadre de la procédure en cours. Cette étape est optionnelle car l'utilisateur peut être informé de la bonne installation et activation du profil d'accès au réseau via le deuxième équipement mobile 11.

A noter qu'en cas de problème lors du procédé de transfert sécurisé du profil d'accès au réseau, l'utilisateur peut ne plus disposer de son profil d'accès au réseau. Il peut dans ce cas faire appel à l'opérateur pour procéder à l'installation et l'activation de son profil sur le deuxième équipement mobile 11. En tout état de cause, aucun clone du profil d'accès n'existe et à aucun moment la sécurité du réseau n'est remise en cause.

Le procédé de protection d'un profil d'accès contre le clonage, tel que décrit précédemment s'intègre facilement dans d'autres procédés, tels que par exemple un procédé de transfert sécurisé d'un profil d'accès d'un premier équipement mobile à un deuxième équipement mobile. Dans cet exemple et au cours des étapes préalables (non représentés), les deux équipements mobiles 10 et 11 peuvent s'appairer selon une méthode connue, puis les deux modules de sécurité 101 et 102 des deux équipements mobiles 10 et 11 peuvent établir un canal logique de communication sécurisé afin d'initier ensuite le transfert du profil d'accès au réseau du premier module de sécurité vers le deuxième module de sécurité tel que décrit précédemment. Un tel procédé peut ainsi être avantageusement être utilisé pour qu'un utilisateur transfère lui-même, c'est-à-dire sans contacter l'opérateur, son profil d'accès au réseau vers un module de sécurité compris dans un deuxième équipement qu'il vient d'acquérir.

Un module de sécurité 101, apte à mettre en œuvre les étapes du procédé de protection d'un profil d'accès à un réseau contre le clonage tel que décrit précédemment va maintenant être décrit en relation avec la figure 2.

Le module de sécurité 101 est par exemple une carte SIM embarquée de type eUICC. On note que le module de sécurité 101 décrit ici est aussi bien apte à initier le transfert d'un profil d'accès qu'il mémorise, qu'à recevoir un tel profil. Ainsi, le module de sécurité 101 décrit ici met en œuvre aussi bien les étapes du procédé décrit précédemment et mises en œuvre par le premier module de sécurité 101 que celles mises en œuvre par le deuxième module de sécurité 111.

Le module de sécurité 101 comprend :
- une unité de traitement ou processeur 101-1, ou « CPU » (de l'anglais "Central Processing Unit"), destinée à charger des instructions en mémoire, à les exécuter, à effectuer des opérations ;
- un ensemble de mémoires, dont une mémoire volatile 101-2, ou "RAM" (pour "Random Access Memory") utilisée pour exécuter des instructions de code, stocker des variables, etc., et une mémoire de stockage 101-3 de type « EEPROM » (de l'anglais « Electrically Erasable Programmable Read Only Memory »). En particulier, la mémoire de stockage 101-3 est agencée pour mémoriser un module logiciel qui comprend des instructions de code pour mettre en œuvre les étapes du procédé de protection d'un profil d'accès au réseau contre le clonage tel que décrit précédemment et qui sont mises en œuvre par le module de sécurité 101. La mémoire de stockage 101-3 est également agencée pour mémoriser dans une zone sécurisée la clé privée associée au certificat de clé publique et le profil d'accès au réseau. La mémoire volatile 101-2 est également agencée pour mémorisée la clé secrète Kp générée au cours de l'étape E01. Le module de sécurité 101 comprend également une interface de communication avec l'équipement mobile 10, non représentée sur la figure 2.

Le module de sécurité 101 comprend également :
- un module 101-4 d'établissement d'un canal logique de communication, agencé pour établir un canal de communication logique avec un module de sécurité d'un deuxième équipement mobile, vers lequel il est prévu de transférer le profil d'accès au réseau. Dans l'exemple de réalisation décrit ici, le canal logique est sécurisé, offrant ainsi un canal authentifié, protégé en confidentialité et en intégrité. Dans cet exemple de réalisation, le module 101-4 d'établissement d'un canal logique de communication intègre des modules logiciels (non représentés) aptes à mettre en œuvre une authentification mutuelle entre le module de sécurité 101 et le deuxième module de sécurité 102, un chiffrement des données transmises sur le canal et un contrôle d'intégrité des données transmises sur le canal. Le module 101-4 met en œuvre une des étapes préalable (non représentée sur la figure 1) ;
- un module 101-5 de génération d'une clé secrète, agencé pour que le module de sécurité 101 génère la clé secrète Kp destinée à être utilisée pour chiffrer le paquet de données associé aux données du profil à transférer. Le module 101-5 de génération est agencé pour mettre en œuvre l'étape E01 de génération de la clé secrète du procédé de protection d'un profil contre le clonage décrit précédemment ;
- un module 101-6 de chiffrement et d'envoi, agencé pour chiffrer un paquet de données associé au profil d'accès au réseau au moyen de ladite clé secrète, et pour envoyer au deuxième module de sécurité ledit paquet chiffré à travers le canal logique de communication. Le module 101-6 de chiffrement et d'envoi est agencé pour mettre en œuvre l'étape E03 du procédé de protection d'un profil contre le clonage décrit précédemment ;
- un module 101-7 de réception, agencé pour recevoir en provenance du deuxième module de sécurité un accusé de réception, représentatif de la bonne réception dudit paquet de données chiffré. Le module 101-7 de réception est agencé pour mettre en œuvre l'étape E05 du procédé de protection d'un profil contre le clonage décrit précédemment ; et,
- un module 101-8 de suppression, agencé pour supprimer le paquet de données associé au profil d'accès au réseau. Le module de suppression101-8 est agencé pour mettre en œuvre l'étape E06 du procédé de protection d'un profil contre le clonage décrit tel que décrit précédemment ;
- un module d'envoi 101-9, agencé pour envoyer ladite clé secrète au deuxième module de sécurité à travers le canal logique de communication. Le module 101-9 d'envoi est agencé pour mettre en œuvre l'étape E07 d'envoi de la clé secrète du procédé de protection d'un profil contre le clonage décrit tel que décrit précédemment.

Le module 101-4 d'établissement d'un canal logique de communication, le module 101-5 de génération d'une clé secrète, le module 101-6 de chiffrement et d'envoi, le module 101-7 de de réception, 101-8 de suppression et le module d'envoi 101-9 sont de préférence des modules logiciels comprenant des instructions logicielles pour mettre en œuvre les étapes du procédé de protection d'un profil d'accès à un réseau contre le clonage tel que décrit précédemment.

Dans un exemple de réalisation, où le module de sécurité 101 joue le rôle du deuxième module de sécurité 102, le module de sécurité 101 comprend également :
- un module 101-10 de réception du paquet de données chiffré associé au profil d'accès au réseau. Le module 101-10 est agencé pour mettre en œuvre l'étape E03 du procédé de protection d'un profil d'accès au réseau contre le clonage tel que décrit précédemment, lorsque l'étape est mise en œuvre par le deuxième module de sécurité ;
- un module d'envoi 101-11 d'un accusé de réception, agencé pour envoyer l'accusé de réception représentatif de la bonne réception dudit paquet de données chiffré. Le module d'envoi 101-11 est agencé pour mettre en œuvre l'étape E05 du procédé de protection d'un profil d'accès au réseau contre le clonage, tel que décrit précédemment ;
- un deuxième module de réception 101-12, agencés pour recevoir la clé secrète. Le deuxième module de réception 101-12 est agencé pour mettre en œuvre l'étape E07 du procédé de protection d'un profil d'accès au réseau contre le clonage, tel que décrit précédemment ;
- un module de déchiffrement 101-13, agencé pour déchiffrer, au moyen de la clé secrète reçue, le paquet de données chiffré. Le module de déchiffrement 101-13 est agencé pour mettre en œuvre l'étape E10 du procédé de protection d'un profil d'accès au réseau contre le clonage, tel que décrit précédemment ;
- de façon optionnelle un module d'envoi d'un accusé de réception (non représenté sur la figure 2). Ce module est agencé pour attester auprès du premier module de sécurité 101 de la bonne réception du paquet chiffré associé au profil d'accès au réseau, du bon déchiffrement du paquet chiffré et de la bonne installation et activation sur le module de sécurité 101 du profil obtenu par déchiffrement du paquet chiffré.

L'invention concerne aussi :
- un programme pour un module de sécurité associé à équipement mobile, comprenant des instructions de code de programme destinées à commander l'exécution des étapes du procédé de protection d'un profil d'accès à un réseau contre le clonage tel que décrit précédemment, lorsque le programme est exécuté sur ledit module de sécurité ;
- un support d'enregistrement lisible sur lequel est enregistré le programme décrit ci-dessus.

L'invention porte également sur un équipement mobile qui comprend un module de sécurité tel que décrit précédemment.

## Revendications

1. Procédé de protection d'un profil d'accès à un réseau contre le clonage, un premier équipement mobile (10) comprenant un module de sécurité (101), dit « premier module de sécurité », ledit premier module de sécurité comprenant ledit profil d'accès au réseau, ledit premier équipement mobile transmettant à un deuxième équipement mobile (11) comprenant un module de sécurité (111), dit « deuxième module de sécurité », ledit profil d'accès au réseau, ledit premier module de sécurité, respectivement ledit deuxième module de sécurité, établissant un canal logique de communication avec le deuxième module de sécurité, respectivement le premier module de sécurité, ledit procédé comprenant les étapes suivantes, mises en œuvre par le premier module de sécurité :
- génération (E01) d'une clé secrète,
- chiffrement (E03), au moyen de ladite clé secrète, d'un paquet de données associé au profil d'accès au réseau, et envoi au deuxième module de sécurité dudit paquet chiffré à travers le canal logique de communication,
- réception (E05) en provenance du deuxième module de sécurité d'un accusé de réception, représentatif de la bonne réception dudit paquet de données chiffré,
- suppression (E06) du paquet de données associé au profil d'accès au réseau, puis envoi (E07) de la clé secrète au deuxième module de sécurité à travers le canal logique de communication.

2. Procédé de protection d'un profil d'accès à un réseau contre le clonage selon la revendication 1, comprenant les étapes suivantes, mises en œuvre par le deuxième module de sécurité (111) :
- réception (E03) du paquet chiffré des données associées au profil d'accès au réseau,
- envoi (E05) d'un l'accusé de réception attestant de la bonne réception du paquet chiffré,
- réception (E07) de la clé secrète,
- déchiffrement (E10) du paquet de données chiffré au moyen de la clé secrète reçue.

3. Procédé de protection d'un profil d'accès à un réseau contre le clonage selon l'une des revendications précédentes, dans lequel le canal logique de communication logique est un canal sécurisé.

4. Procédé de protection d'un profil d'accès à un réseau contre le clonage selon l'une des revendications précédentes dans lequel la clé secrète est générée conformément à une méthode de génération de clés dans un module de sécurité intégrée dans le premier module de sécurité.

5. Procédé de protection d'un profil d'accès à un réseau contre le clonage selon l'une des revendications 1 à 3, dans lequel la clé secrète est générée en appliquant un algorithme de diversification de clés, stocké dans le premier module de sécurité, à une clé de diversification mémorisée dans le profil d'accès au réseau.

6. Procédé de protection d'un profil d'accès à un réseau contre le clonage selon l'une des revendications 3 à 5, comprenant en outre les étapes suivantes, mises en œuvre par le deuxième module de sécurité :
- contrôle (E04) de l'intégrité du paquet de données d'accès au réseau reçu chiffré du premier module de sécurité, et
- contrôle (E08) de l'intégrité de la clé de chiffrement reçue chiffrée du premier module de sécurité.

7. Module de sécurité (101), dit premier module de sécurité, compris dans un premier équipement mobile (10), ledit premier module de sécurité comprenant un profil d'accès au réseau, et étant adapté pour établir un canal logique de communication avec un module de sécurité (111), dit deuxième module de sécurité, compris dans un deuxième équipement (11), ledit module de sécurité comprenant :
- des moyens (101-5) de génération d'une clé secrète, agencés pour générer une clé secrète,
- des moyens (101-6) de chiffrement et d'envoi, agencés pour chiffrer un paquet de données associé au profil d'accès au réseau au moyen de ladite clé secrète, et pour envoyer au deuxième module de sécurité ledit paquet chiffré à travers le canal logique de communication,
- des moyens de réception (101-7), agencés pour recevoir en provenance du deuxième module de sécurité un accusé de réception, représentatif de la bonne réception dudit paquet de données chiffré,
- des moyens (101-8) de suppression, agencés pour supprimer le paquet de données associé au profil d'accès au réseau, et
- des moyens d'envoi (101-9) agencés pour envoyer ladite clé secrète au deuxième module de sécurité à travers le canal logique de communication après la suppression du paquet de données associé au profil d'accès au réseau.

8. Module de sécurité selon la revendication précédente, comprenant en outre :
- des deuxième moyens de réception (101-10), agencés pour recevoir le paquet chiffré des données associées au profil d'accès au réseau,
- des moyens d'envoi (101-11), agencés pour envoyer l'accusé de réception représentatif de la bonne réception dudit paquet de données chiffré,
- des troisième moyens de réception (101-12), agencés pour recevoir la clé secrète,
- des moyens de déchiffrement (101-13), agencés pour déchiffrer, au moyen de la clé secrète reçue, le paquet de données chiffré.

9. Programme pour un module de sécurité associé à équipement mobile, comprenant des instructions de code de programme destinées à commander l'exécution des étapes du procédé de protection d'un profil d'accès à un réseau contre le clonage selon l'une des revendications 1 à 6, lorsque le programme est exécuté sur ledit équipement associé audit module.

10. Support de données dans lequel est enregistré le programme selon la revendication précédente.

11. Equipement mobile comprenant un module de sécurité selon la revendication 7 ou la revendication 8.

## Patentansprüche

1. Verfahren zum Schutz eines Netzwerkzugangsprofils gegen Klonen, wobei ein erstes Mobilgerät (10) ein Sicherheitsmodul (101), als "erstes Sicherheitsmodul" bezeichnet, beinhaltet, wobei das erste Sicherheitsmodul das Netzwerkzugangsprofil beinhaltet, wobei das erste Mobilgerät das Netzwerkzugangsprofil an ein zweites Mobilgerät (11) überträgt, das ein Sicherheitsmodul (111), als "zweites Sicherheitsmodul" bezeichnet, beinhaltet, wobei das erste Sicherheitsmodul bzw. das zweite Sicherheitsmodul jeweils einen logischen Kommunikationskanal mit dem zweiten Sicherheitsmodul bzw. dem ersten Sicherheitsmodul herstellt, wobei das Verfahren die folgenden Schritte beinhaltet, die durch das erste Sicherheitsmodul umgesetzt werden:
- Generieren (E01) eines geheimen Schlüssels,
- Verschlüsseln (E03), mit Hilfe des geheimen Schlüssels, eines mit dem Netzwerkzugangsprofil assoziierten Datenpakets und Senden des verschlüsselten Pakets über den logischen Kommunikationskanal an das zweite Sicherheitsmodul,
- Empfangen (E05), von dem zweiten Sicherheitsmodul, einer Empfangsbestätigung, die für den ordnungsgemäßen Empfang des verschlüsselten Datenpakets repräsentativ ist,
- Löschen (E06) des mit dem Netzwerkzugangsprofil assoziierten Datenpakets und dann Senden (E07) des geheimen Schlüssels über den logischen Kommunikationskanal an das zweite Sicherheitsmodul.

2. Verfahren zum Schutz eines Netzwerkzugangsprofils gegen Klonen nach Anspruch 1, das die folgenden Schritte beinhaltet, die durch das zweite Sicherheitsmodul (111) umgesetzt werden:
- Empfangen (E03) des verschlüsselten Pakets der mit dem Netzwerkzugangsprofil assoziierten Daten,
- Senden (E05) einer Empfangsbestätigung, die den ordnungsgemäßen Empfang des verschlüsselten Pakets bescheinigt,
- Empfangen (E07) des geheimen Schlüssels,
- Entschlüsseln (E10) des verschlüsselten Datenpakets mit Hilfe des empfangenen geheimen Schlüssels.

3. Verfahren zum Schutz eines Netzwerkzugangsprofils gegen Klonen nach einem der vorhergehenden Ansprüche, wobei der logische Kommunikationskanal ein sicherer Kanal ist.

4. Verfahren zum Schutz eines Netzwerkzugangsprofils gegen Klonen nach einem der vorhergehenden Ansprüche, wobei der geheime Schlüssel gemäß einer Methode zur Generierung von Schlüsseln in einem Sicherheitsmodul generiert wird, die in das erste Sicherheitsmodul integriert ist.

5. Verfahren zum Schutz eines Netzwerkzugangsprofils gegen Klonen nach einem der Ansprüche 1 bis 3, wobei der geheime Schlüssel durch das Anwenden eines Schlüsseldiversifizierungsalgorithmus, der in dem ersten Sicherheitsmodul abgespeichert ist, auf einen Diversifizierungsschlüssel, der in dem Netzwerkzugangsprofil gespeichert ist, generiert wird.

6. Verfahren zum Schutz eines Netzwerkzugangsprofils gegen Klonen nach einem der Ansprüche 3 bis 5, das ferner die folgenden Schritte beinhaltet, die durch das zweite Sicherheitsmodul umgesetzt werden:
- Prüfen (E04) der Integrität des Netzwerkzugangsdatenpakets, das von dem ersten Sicherheitsmodul verschlüsselt empfangen wird, und
- Prüfen (E08) der Integrität des Verschlüsselungsschlüssels, der von dem ersten Sicherheitsmodul verschlüsselt empfangen wird.

7. Sicherheitsmodul (101), als erstes Sicherheitsmodul bezeichnet, das in einem ersten Mobilgerät (10) enthalten ist, wobei das erste Sicherheitsmodul ein Netzwerkzugangsprofil beinhaltet und dazu angepasst ist, einen logischen Kommunikationskanal mit einem Sicherheitsmodul (111), als zweites Sicherheitsmodul bezeichnet, das in einem zweiten Gerät (11) enthalten ist, herzustellen, wobei das Sicherheitsmodul Folgendes beinhaltet:
- Mittel (101-5) zum Generieren eines geheimen Schlüssels, die dazu eingerichtet sind, einen geheimen Schlüssel zu generieren,
- Mittel (101-6) zum Verschlüsseln und Senden, die dazu eingerichtet sind, ein mit dem Netzwerkzugangsprofil assoziiertes Datenpaket mit Hilfe des geheimen Schlüssels zu verschlüsseln und das verschlüsselte Paket über den logischen Kommunikationskanal an das zweite Sicherheitsmodul zu senden,
- Empfangsmittel (101-7), die dazu eingerichtet sind, von dem zweiten Sicherheitsmodul eine Empfangsbestätigung zu empfangen, die für den ordnungsgemäßen Empfang des verschlüsselten Datenpakets repräsentativ ist,
- Mittel (101-8) zum Löschen, die dazu eingerichtet sind, das mit dem Netzwerkzugangsprofil assoziierte Datenpaket zu löschen, und
- Sendemittel (101-9), die dazu eingerichtet sind, nach dem Löschen des mit dem Netzwerkzugangsprofil assoziierten Datenpakets den geheimen Schlüssel über den logischen Kommunikationskanal an das zweite Sicherheitsmodul zu senden.

8. Sicherheitsmodul nach dem vorhergehenden Anspruch, das ferner Folgendes beinhaltet:
- zweite Empfangsmittel (101-10), die dazu eingerichtet sind, das verschlüsselte Paket der mit dem Netzwerkzugangsprofil assoziierten Daten zu empfangen,
- Sendemittel (101-11), die dazu eingerichtet sind, die Empfangsbestätigung, die für den ordnungsgemäßen Empfang des verschlüsselten Datenpakets repräsentativ ist, zu senden,
- dritte Empfangsmittel (101-12), die dazu eingerichtet sind, den geheimen Schlüssel zu empfangen,
- Entschlüsselungsmittel (101-13), die dazu eingerichtet sind, das verschlüsselte Datenpaket mit Hilfe des empfangenen geheimen Schlüssels zu entschlüsseln.

9. Programm für ein Sicherheitsmodul, das mit einem Mobilgerät assoziiert ist, beinhaltend Programmcodeanweisungen, die dazu bestimmt sind, die Ausführung der Schritte des Verfahrens zum Schutz eines Netzwerkzugangsprofils gegen Klonen nach einem der Ansprüche 1 bis 6 zu steuern, wenn das Programm auf dem mit dem Modul assoziierten Gerät ausgeführt wird.

10. Datenträger, in dem das Programm nach dem vorhergehenden Anspruch aufgezeichnet ist.

11. Mobilgerät, das ein Sicherheitsmodul nach Anspruch 7 oder Anspruch 8 beinhaltet.

## Claims

1. Method for protecting a network access profile against cloning, a first mobile equipment (10) comprising a security module (101), called "first security module", said first security module comprising said network access profile, said first mobile equipment transmitting said network access profile to a second mobile equipment (11) comprising a security module (111), called "second security module", said first security module, respectively said second security module, establishing a logic communication channel with the second security module, respectively the first security module, said method comprising the following steps, implemented by the first security module:
- generating (E01) a secret key,
- encrypting (E03), by means of said secret key, a data packet associated with the network access profile, and sending said encrypted packet to the second security module through the logic communication channel,
- receiving (E05) an acknowledgement of receipt from the second security module representing the correct reception of said encrypted data packet,
- deleting (E06) the data packet associated with the network access profile, then sending (E07) the secret key to the second security module through the logic communication channel.

2. Method for protecting a network access profile against cloning according to Claim 1, comprising the following steps, implemented by the second security module (111):
- receiving (E03) the encrypted packet of data associated with the network access profile,
- sending (E05) an acknowledgement of receipt acknowledging the correct reception of the encrypted packet,
- receiving (E07) the secret key,
- decrypting (E10) the encrypted data packet by means of the received secret key.

3. Method for protecting a network access profile against cloning according to either of the preceding claims, wherein the logic communication channel is a secure channel.

4. Method for protecting a network access profile against cloning according to one of the preceding claims, wherein the secret key is generated in accordance with a method for generating keys in a security module integrated in the first security module.

5. Method for protecting a network access profile against cloning according to one of Claims 1 to 3, wherein the secret key is generated by applying a key diversification algorithm, stored in the first security module, to a diversification key stored in the network access profile.

6. Method for protecting a network access profile against cloning according to one of Claims 3 to 5, further comprising the following steps, implemented by the second security module:
- checking (E04) the integrity of the encrypted received network access data packet of the first security module, and
- checking (E08) the integrity of the encrypted received encryption key of the first security module.

7. Security module (101), called first security module, included in a first mobile equipment (10), said first security module comprising a network access profile, and being adapted to establish a logic communication channel with a security module (111), called second security module, included in a second equipment (11), said security module comprising:
- means (101-5) for generating a secret key, designed to generate a secret key,
- means (101-6) for encrypting and sending, designed to encrypt a data packet associated with the network access profile by means of said secret key, and to send said encrypted packet to the second security module through the logic communication channel,
- receiving means (101-7), designed to receive an acknowledgement of receipt from the second security module representing the correct reception of said encrypted data packet,
- deleting means (101-8), designed to delete the data packet associated with the network access profile, and
- sending means (101-9), designed to send said secret key to the second security module through the logic communication channel after deletion of the data packet associated with the network access profile.

8. Security module according to the preceding claim, further comprising:
- second receiving means (101-10), designed to receive the encrypted packet of data associated with the network access profile,
- sending means (101-11), designed to send the acknowledgement of receipt representing the correct reception of said encrypted data packet,
- third receiving means (101-12), designed to receive the secret key,
- decrypting means (101-13), designed to decrypt the encrypted data packet by means of the received secret key.

9. Program for a security module associated with mobile equipment, comprising program code instructions intended to control the execution of the steps of the method for protecting a network access profile against cloning according to one of Claims 1 to 6 when the program is executed on said equipment associated with said module.

10. Data medium in which the program according to the preceding claim is stored.

11. Mobile equipment comprising a security module according to Claim 7 or Claim 8.
